# EUROPÄISCHE PATENTSCHRIFT

(11) **EP 2 824 277 B1**
(45) Veröffentlichungstag und Bekanntmachung des Hinweises auf die Patenterteilung: **23.03.2016**
(21) Anmeldenummer: 13176420.1
(22) Anmeldetag: 12.07.2013
(51) Int. Cl.: F01D 5/14, F01D 21/04, F01D 9/04

(54) **Gasturbinenstufe**
Gas turbine stage
Etage de turbine à gaz

(43) Veröffentlichungstag der Anmeldung: 14.01.2015
(73) Patentinhaber: MTU Aero Engines AG, 80995 München (DE)
(72) Erfinder: Dr. Mahle, Inga, 81669 München (DE); Hübner, Norbert, 85221 Dachau (DE); Stanka, Rudolf, 84431 Rattenkirchen (DE); Schütz, Gottfried, 82327 Tutzing (DE); Cleesattel, Norman, 85604 Zorneding (DE)

(56) Entgegenhaltungen:
- EP-A1- 0 661 413
- EP-A1- 1 640 564
- EP-A1- 2 204 534
- US-B1- 6 312 219

## Beschreibung

Die vorliegende Erfindung betrifft eine Gasturbinenstufe mit einer Laufschaufelanordnung mit mehreren Laufschaufeln und einer benachbarten Leitschaufelanordnung mit mehreren Leitschaufeln sowie eine Gasturbine, insbesondere ein Flugtriebwerk, mit einer solchen Gasturbinenstufe.

In einer Gasturbine, wie sie beispielsweise aus der US 6,312,219 B1 bekannt ist, treiben ein oder mehrere Gasturbinenstufen über eine oder mehrere Wellen eine oder mehrere Verdichterstufen und/oder Fans an. In einer oder mehreren der Gasturbinenstufen ist dabei stromabwärts von einer Laufschaufelanordnung eine Leitschaufelanordnung vorgesehen, um die Strömungsgeschwindigkeit des Gases zu verändern.

Fällt bei einem Wellenbruch die Verdichterlast weg, kann es zu einer unerwünschten Geschwindigkeitsüberhöhung der Gasturbineristufe(n) kommen. Diese kann dadurch reduziert oder vermieden werden, dass die hochdrehende Laufschaufelanordnung einer Gasturbinenstufe sich axial gegen eine benachbarte Leitschaufelanordnung verschiebt, an dieser anläuft und durch sie abgebremst wird.

Hierzu muss die Laufschaufelanordnung einen minimalen Axialspalt zwischen Lauf- und Leitschaufelanordnung überwinden, der dazu vorgesehen ist, ein Anstreifen im regulären Betrieb, insbesondere infolge thermisch, fertigungs-, montagetechnisch und/oder dynamisch bedingter Axialtoleranzen, möglichst zu vermeiden.

In der US 6,312,219 B1 ist dieser minimale Axialspalt radial innen zwischen einem Schaufelfuß der Laufschaufelanordnung und einem Deckband der Leitschaufelanordnung ausgebildet.

Eine Aufgabe einer Ausführung der vorliegenden Erfindung ist es, eine verbesserte Gasturbine zur Verfügung zu stellen.

Diese Aufgabe wird durch eine Gasturbinenstufe mit den Merkmalen des Anspruchs 1 gelöst. Anspruch 9 stellt eine Gasturbine, insbesondere Flugtriebwerk-Gasturbine, mit wenigstens einer erfindungsgemäßen Gasturbinenstufe unter Schutz. Vorteilhafte Ausführungsformen der Erfindung sind Gegenstand der Unteransprüche.

Eine Gasturbinenstufe nach einem Aspekt der vorliegenden Erfindung kann in einer Ausführung eine vorderste bzw. stromaufwärtigste, eine hinterste bzw. stromabwärtigste, oder eine mittlere Turbinenstufe zwischen einer vordersten und hintersten Turbinenstufe einer Turbine, insbesondere einer Hoch-, Mittel- oder Niederdruckturbine, einer Gasturbine, insbesondere einer Flugtriebwerk-Gasturbine sein. In einer Ausführung können eine oder mehrere, insbesondere alle Gasturbinenstufen der Gasturbine in der nachfolgend erläuterten Weise ausgebildet sein.

Die Gasturbinenstufe weist eine Laufschaufelanordnung mit mehreren in einer Umfangsrichtung verteilten Laufschaufeln auf, die lösbar oder dauerhaft, insbesondere stoffschlüssig, mit einem Rotor bzw. einer Rotorscheibe verbunden, insbesondere integral damit ausgebildet sein können.

Stromabwärts an die Laufschaufelanordnung anschließend weist die Gasturbinenstufe eine der Laufschaufelanordnung benachbarte Leitschaufelanordnung mit mehreren in Umfangsrichtung verteilten Leitschaufeln mit Leitschaufelblattvorderkanten auf, die der Laufschaufelanordnung gegenüberliegen.

Nach einem Aspekt der vorliegenden Erfindung ist ein minimaler Axialspalt zwischen Lauf- und Leitschaufelanordnung zwischen einer stromabwärtigen Stirnfläche der Laufschaufelanordnung und einem Kontaktbereich einer oder mehrerer Leitschaufelblattvorderkanten ausgebildet.

Auf diese Weise kommt es gemäß einer Ausführung der vorliegenden Erfindung bei einem Wellenbruch der Gasturbine zuerst zu einem Anstreifen der Stirnfläche an der Leitschaufelblattvorderkante bzw. den Leitschaufelblattvorderkanten und in einer Folge zu einem Abbremsen der Laufschaufelanordnung, so dass eine unerwünschte Geschwindigkeitsüberhöhung reduziert oder vermieden werden kann.

Das Anstreifen bzw. Abbremsen an Leitschaufeln kann insbesondere durch deren Kontaktgeometrie, Steifigkeit, Festigkeit und/oder Deformierbarkeit vorteilhaft sein. Beispielsweise kann durch eine geeignete elastische und/oder plastische Verformung und/oder Zerlegung von Leitschaufeln Energie absorbiert werden.

Die radiale Lage der Stirnfläche der Laufschaufelanordnung relativ zur Leitschaufelblattvorderkante und damit auch der Kontaktbereich der Leitschaufelblattvorderkante kann, insbesondere thermisch, fertigungs-, montagetechnisch und/oder dynamisch bedingt, variieren. Beispielsweise kann sich infolge einer Erwärmung die radiale Lage eines Außendeckbands der Laufschaufelanordnung verändern. Um gleichwohl ein Anstreifen im normalen Betrieb möglichst zu vermeiden, sind diese verschiedenen radialen Lagen bzw. die verschiedenen möglichen Kontaktbereiche zu berücksichtigen.

Ist die Leitschaufelblattvorderkante, insbesondere aus aerodynamischen Gründen, geneigt, muss der minimale axiale Abstand für den axial vordersten dieser möglichen Kontaktbereiche eingehalten bzw. vorgegeben werden, um auch in dieser radiale Lage der Stirnfläche ein Anstreifen im normalen Betrieb möglichst zu vermeiden. Hierdurch verlängert sich jedoch nachteilig die Baulänge der Gasturbinenstufe.

Daher ist nach einem Aspekt der vorliegenden Erfindung vorgesehen, dass die Leitschaufelblattvorderkante in demjenigen radialen Bereich, in dem die Stirnfläche der sich infolge eines Wellenbruchs axial verlagernden Laufschaufelanordnung variieren kann, und damit die Menge der möglichen Kontaktbereiche der Leitschaufelblattvorderkante wenigstens im Wesentlichen parallel zu einer Radialebene ausgebildet ist, die senkrecht zu einer Drehachse der Gasturbinenstufe ist. Auf diese Weise ändert sich der minimale Axialspalt bei einer Variation der radialen Lage der Stirnfläche der Laufschaufelanordnung relativ zur Leitschaufelblattvorderkante nur wenig und die Leitschaufelanordnung kann vorteilhaft axial näher an die Laufschaufelanordnung herangerückt werden.

Nach einem Aspekt der vorliegenden Erfindung ist ein minimaler Axialspalt zwischen Lauf- und Leitschaufelanordnung in einer ersten radialen Lage einer Stirnfläche der Laufschaufelanordnung zwischen dieser Stirnfläche und einem dieser Stirnfläche gegenüberliegenden ersten Kontaktbereich einer Leitschaufelblattvorderkante und in einer hiervon verschiedenen zweiten radialen Lage der Stirnfläche zwischen der Stirnfläche und einem der Stirnfläche gegenüberliegenden zweiten Kontaktbereich dieser Leitschaufelblattvorderkante ausgebildet, wobei diese Leitschaufelblattvorderkante in dem Bereich zwischen dem ersten und dem zweiten Kontaktbereich einen Axialversatz von durchgehend höchstens 0,6 %, insbesondere höchstens 0,3 % einer Radialhöhe der Leitschaufelblattvorderkante aufweist. Die Radialhöhe im Sinne der vorliegenden Erfindung kann insbesondere die radiale Erstreckung zwischen einer radial inneren und einer radial äußeren Leitschaufelblattbegrenzung bzw. einem Ende der Leitschaufelblattvorderkante sein. In einer Ausführung ist die Radialhöhe der radiale Abstand zwischen einem gehäuseseitigen Leitschaufelfuß oder einer radial äußeren Kanalwand, insbesondere einer Gehäuseinnenwand, auf axialer Höhe der Leitschaufelvorderkanten einerseits und einem rotorseitigen Innendeckband, einer radial inneren freien Leitschaufelspitze oder einer radial inneren Kanalwand, insbesondere einer Nabenaußenwand, auf axialer Höhe der Leitschaufelvorderkanten andererseits.

Überraschenderweise wird die Leitschaufelanordnung, insbesondere ihre Aerodynamik, -akustik und -elastizität, durch diese Ausbildung nur unwesentlich beeinträchtigt, wobei zugleich auf grund des vorstehend erläuterten Zusammenhangs auch bei verkürzter axialer Baulänge in verschiedenen radialen Lagen der minimale Abstand eingehalten werden kann.

Die erste und/oder zweite radiale Lage können insbesondere thermisch, fertigungs-, montagetechnisch und/oder dynamisch bedingte maximale Lagen sein und in einer Ausführung die maximal mögliche radiale Auslenkung bzw. Variation der Stirnfläche definieren.

In einer Ausführung ist der erste Kontaktbereich ein radial außenliegender bzw. äußerer, vorzugsweise radial äußerster bzw. radial äußerster möglicher Kontaktbereich, insbesondere ein radial äußeres Ende der Leitschaufelvorderkante, und der zweite Kontaktbereich ein radial demgegenüber weiter innen angeordneter Kontaktbereich.

Insbesondere dann kann in einer Ausführung die Stirnfläche eine Stirnfläche eines Außendeckbandes der Laufschaufelanordnung sein.

Durch radial außenliegende Kontaktbereiche kann in einer Ausführung vorteilhaft bei gleichen Anstreifkräften ein höheres Bremsdrehmoment aufgeprägt werden.

In einer anderen Ausführung ist der erste Kontaktbereich ein radial innenliegender bzw. innerer, vorzugsweise radial innerster bzw. radial innerster möglicher Kontaktbereich, insbesondere ein radial inneres Ende der Leitschaufelvorderkante, und der zweite Kontaktbereich ein radial demgegenüber weiter außen angeordneter Kontaktbereich.

Insbesondere dann kann in einer Ausführung die Stirnfläche eine Stirnfläche eines Innendeckbandes bzw. einer Schaufelplattform der Laufschaufelanordnung sein.

Durch radial innenliegende Kontaktbereiche kann in einer Ausführung vorteilhaft rotornäher abgebremst werden.

In einer Ausführung ist der zweite Kontaktbereich in radialer Richtung wenigstens 2% und/oder höchstens 20% der Radialhöhe der Leitschaufelblattvorderkante von dem ersten Kontaktbereich beabstandet. Zusätzlich oder alternativ kann der zweite Kontaktbereich in radialer Richtung wenigstens 2% und/oder höchstens 20% der Radialhöhe der Leitschaufelblattvorderkante von einem radial inneren oder äußeren Ende der Leitschaufelblattvorderkante beabstandet sein. Wenn der zweite Kontaktbereich ein weiter innen angeordneter, insbesondere radial innerster Kontaktbereich ist, kann er somit in einer Ausführung zwischen 80% und 98% der radialen Höhe der Leitschaufelblattvorderkante liegen, gemessen von radial innen nach radial außen. In einer bevorzugten Weiterbildung liegt der zweite, radial innerste Kontaktbereich, wenigstens im Wesentlichen, bei 85% der radialen Höhe der Leitschaufelblattvorderkante. Der erste Kontaktbereich kann in einer Weiterbildung zwischen 98% und 100% der radialen Höhe der Leitschaufelblattvorderkante liegen, gemessen wiederum von radial innen nach radial außen.

Insbesondere aus aerodynamischen, aeroakustischen und/oder aeroelastischen Gründen kann die Leitschaufelblattvorderkante in einem Radialbereich auf der dem ersten Kontaktbereich gegenüberliegenden Seite des zweiten Kontaktbereichs, insbesondere in einem Radialbereich zwischen 30% und 50% der Radialhöhe der Leitschaufelblattvorderkante, eine Vorwärtsneigung von wenigstens 8°, insbesondere wenigstens 10° aufweisen. Unter einer Vorwärtsneigung wird vorliegend insbesondere verstanden, das ein radial weiter außen liegender Punkt der Leitschaufelblattvorderkante der Laufschaufelanordnung näher liegt als ein radial weiter innen liegender Punkt, bzw. dass sich die Leitschaufelblattvorderkante von radial innen nach außen gesehen der Laufschaufelanordnung nähert. Die Neigung bzw. der Winkel kann insbesondere gegen eine Radialebene senkrecht zu einer Drehachse der Gasturbinenstufe definiert sein.

In einer Weiterbildung weist die Leitschaufelblattvorderkante einen Übergangsbereich auf, der sich von dem zweiten Kontaktbereich zu dem Radialbereich erstreckt, und in dem eine Neigung der Leitschaufelblattvorderkante zu dem Radialbereich hin, insbesondere streng monoton, zunimmt. Unter einer streng monoton zunehmenden Neigung wird vorliegend insbesondere verstanden, das ein Winkel einer Tangente an einen Punkt der Leitschaufelblattvorderkante, der näher an dem zweiten Kontaktbereich liegt, stets kleiner ist als der Winkel einer Tangente an einen beliebigen Punkt der Leitschaufelblattvorderkante, der weiter von dem zweiten Kontaktbereich entfernt ist. Wenn der zweite Kontaktbereich ein radial innerer, insbesondere innerster Kontaktbereich ist, kann somit in einer Ausführung die Neigung der Leitschaufelblattvorderkante, ausgehend von dem zweiten Kontaktbereich nach radial innen hin streng monoton zunehmen. Durch die, insbesondere streng monotone, Zunahme wird ein vorteilhafter Übergang in den vorwärts geneigten Radialbereich dargestellt.

In einer Ausführung ist die Leitschaufelblattvorderkante zwischen dem ersten und dem zweiten Kontaktbereich verstärkt, insbesondere durch eine Oberflächenbehandlung, Materialaufdickung, ein anderes Material oder dergleichen. Hierdurch kann der Anstreifvorgang im Falle eines Wellenbruchs vorteilhaft beeinflusst werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Gasturbinenstufe einer Flugtriebwerk-Niederdruckturbine nach einer Ausführung der vorliegenden Erfindung;
- Fig. 2A: einen vergrößerten Teilausschnitt der Fig. 1 in einer ersten radialen Lage einer Stirnfläche einer Laufschaufelanordnung der Gasturbinenstufe;
- Fig. 2B: den Teilausschnitt der Fig. 2A in einer zweiten radialen Lage der Stirnfläche;
- Fig. 3A: einen Teilausschnitt einer Gasturbinenstufe nach betriebsinterner Praxis in Fig. 2A entsprechender Darstellung; und
- Fig. 3B: den Teilausschnitt der Fig. 3A in einer zweiten radialen Lage der Stirnfläche.

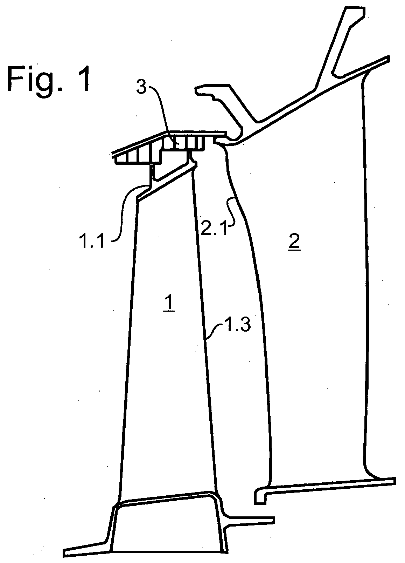

Fig. 1 zeigt einen Teil einer Gasturbinenstufe einer Flugtriebwerk-Niederdruckturbine nach einer Ausführung der vorliegenden Erfindung. Die Gasturbinenstufe ist eine mittlere Turbinenstufe, kann jedoch gleichermaßen eine vorderste oder hinterste Turbinenstufe sein.

Die Gasturbinenstufe weist eine Laufschaufelanordnung mit mehreren in einer Umfangsrichtung verteilten Laufschaufeln 1 auf, die lösbar oder dauerhaft mit einem Rotor (nicht dargestellt) verbunden sind. Radial außen weisen die Laufschaufeln ein Außendeckband 1.1 mit zwei Dichtfinnen auf, die einer Außenwabendichtung 3 gegenüberliegen.

Stromabwärts an die Laufschaufelanordnung anschließend (rechts in Fig. 1) weist die Gasturbinenstufe eine Leitschaufelanordnung mit mehreren in Umfangsrichtung verteilten Leitschaufeln 2 mit Leitschaufelblattvorderkanten 2.1 auf, die der Laufschaufelanordnung gegenüberliegen.

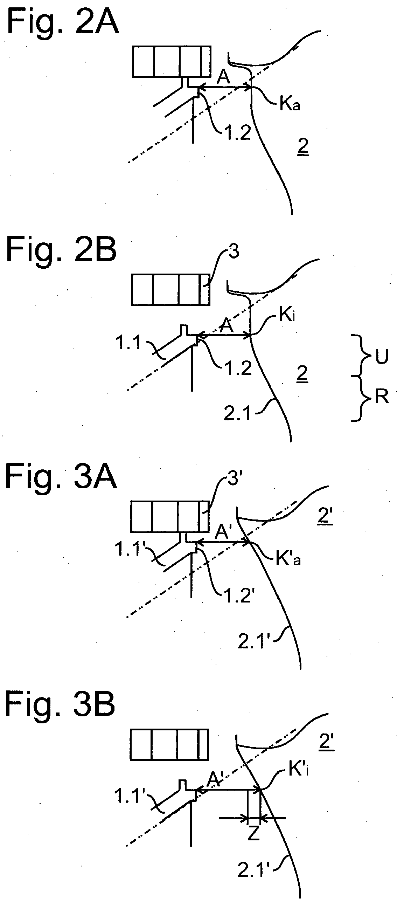

Fig. 2A zeigt einen vergrößerten Teilausschnitt der Fig. 1 in einer ersten, radial äußersten Lage einer stromabwärtigen Stirnfläche 1.2 des Außendeckbands 1.1 der Laufschaufelanordnung der Gasturbinenstufe, Fig. 2B den Teilausschnitt der Fig. 2A in einer zweiten, radialen innersten Lage der Stirnfläche. Strichpunktiert ist eine nominale äußere Kanalwand angedeutet, die durch das Außendeckband 1.1 bzw. einen gehäuseseitigen Leitschaufelfuß definiert ist.

Ein minimaler Axialspalt A zwischen Lauf- und Leitschaufelanordnung ist in der ersten radial äußersten Lage (vgl. Fig. 2A) zwischen der Stirnfläche 1.2 und einem dieser Stirnfläche gegenüberliegenden ersten, radial äußersten Kontaktbereich Kₐ der Leitschaufelblattvorderkante 2.1 ausgebildet. In der zweiten radial innersten Lage der Stirnfläche 1.2 (vgl. Fig. 2B) ist der minimale Axialspalt A zwischen der Stirnfläche und einem der Stirnfläche gegenüberliegenden zweiten, radial innersten Kontaktbereich Kᵢ dieser Leitschaufelblattvorderkante ausgebildet.

Die Leitschaufelblattvorderkante 2.1 verläuft zwischen dem ersten und dem zweiten Kontaktbereich im Wesentlichen senkrecht zu einer Radialebene (vertikal in Fig. 2), die senkrecht zu der Drehachse der Gasturbinenstufe (horizontal in Fig. 2) ist und weist somit einen Axialversatz von 0% der Radialhöhe der Leitschaufelblattvorderkante auf.

Auf diese Weise kommt es bei einem Wellenbruch der Gasturbine zuerst zu einem Anstreifen der Stirnfläche 1.2 an der Leitschaufelblattvorderkante 2.1 zwischen den beiden Kontaktbereichen Kₐ, Kᵢ und in einer Folge zu einem Abbremsen der Laufschaufelanordnung, so dass eine unerwünschte Geschwindigkeitsüberhöhung reduziert oder vermieden werden kann.

Wie die Zusammenschau der Fig. 2A, 2B zeigt, kann die radiale Lage der Stirnfläche 1.2 relativ zur Leitschaufelblattvorderkante 2.1 variieren. Auf der anderen Seite soll die Leitschaufelblattvorderkante, insbesondere aus aerodynamischen Gründen, geneigt sein. Hierdurch kann sich jedoch nachteilig die Baulänge der Gasturbinenstufe verlängern, wie nachfolgend mit Bezug auf Fig. 3A, 3B erläutert wird.

Fig. 3A, 3B zeigen in Fig. 2A, 2B entsprechender Darstellung einen Teilausschnitt einer Gasturbinenstufe nach betriebsinterner Praxis. Einander entsprechende Elemente sind durch gleiche Bezugszeichen bezeichnet und durch einen Apostroph (') unterschieden, so dass hierzu auf die vorstehende Beschreibung Bezug genommen und nachfolgend nur auf die Unterschiede eingegangen wird.

In der Ausführung der Fig. 3 ist die Leitschaufelblattvorderkante 2.1' auch zwischen den möglichen Kontaktbereichen mit der radial variierenden Stirnfläche 1.2' verhältnismäßig stark zur Laufschaufelanordnung hin geneigt. Bei radial äußerster Lage (vgl. Fig. 3A) ist der minimale Axialspalt A' = A zwischen Lauf- und Leitschaufelanordnung zwischen der Stirnfläche 1.2' und einem dieser Stirnfläche gegenüberliegenden ersten, radial äußersten Kontaktbereich K'ₐ der Leitschaufelblattvorderkante 2.1' ausgebildet.

Bei radial innerster Lage der Stirnfläche 1.2' (vgl. Fig. 3B) ist der minimale Axialspalt A' zwischen Lauf- und Leitschaufelanordnung zwischen der Stirnfläche 1.2' und einem dieser Stirnfläche gegenüberliegenden zweiten, radial innersten Kontaktbereich K'ᵢ der Leitschaufelblattvorderkante 2.1 ausgebildet. Da dieser - aufgrund der Vorwärtsneigung der Leitschaufelblattvorderkante 2.1' in diesem Bereich - axial um einen Versatz Z axial von der Laufschaufelanordnung weg versetzt ist, verlängert sich der minimale Axialspalt A' > A und damit die Baulänge der Gasturbinenstufe um diesen Versatz Z.

Die erste und zweite radiale Lage (vgl. Fig. 2A, 2B) sind thermisch, fertigungs-, montagetechnisch und/oder dynamisch bedingte maximale Lagen und definieren die maximal mögliche radiale Auslenkung bzw. Variation der Stirnfläche 1.2.

Der zweite Kontaktbereich Kᵢ ist in radialer Richtung zwischen 2% und 20% der Radialhöhe der Leitschaufelblattvorderkante 2.1 von dem ersten Kontaktbereich Kₐ und dem radial äußeren Ende der Leitschaufelblattvorderkante bzw. deren gehäuseseitigem Schaufelfuß beabstandet. Somit liegt er umgekehrt zwischen 80% und 98% der radialen Höhe der Leitschaufelblattvorderkante, gemessen von radial innen nach radial außen.

Die Leitschaufelblattvorderkante 2.1 weist in einem Radialbereich R auf der dem ersten Kontaktbereich gegenüberliegenden Seite des zweiten Kontaktbereichs (unten in Fig. 2) eine Vorwärtsneigung von wenigstens 10° auf. Von dem zweiten Kontaktbereich Kᵢ zu diesem Radialbereich R erstreckt sich ein Übergangsbereich U, in dem eine Neigung der Leitschaufelblattvorderkante zu dem Radialbereich hin streng monoton zunimmt.

Die Leitschaufelblattvorderkante 2.1 ist zwischen dem ersten und dem zweiten Kontaktbereich verstärkt (nicht dargestellt).

Obwohl in der vorhergehenden Beschreibung exemplarische Ausführungen erläutert wurden, sei daraufhingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Laufschaufel
- 1.1('): Außendeckband
- 1.2('): Stirnfläche
- 1.3: Hinterkante
- 2 ('): Leitschaufel
- 2.1('): Leitschaufelblattvorderkante
- 3('): Außenwabendichtung

- A('): minimaler Axialspalt
- Kₐ('): erster, radial äußerster Kontaktbereich
- Kᵢ('): zweiter, radial innerster Kontaktbereich
- R: Radialbereich
- U: Übergangsbereich
- Z: Versatz

## Patentansprüche

1. Gasturbinenstufe mit einer Laufschaufelanordnung mit mehreren Laufschaufeln (1) und einer benachbarten Leitschaufelanordnung mit mehreren Leitschaufeln (2) mit Leitschaufelblattvorderkanten (2.1), die der Laufschaufelanordnung gegenüberliegen,
**dadurch gekennzeichnet, dass**
ein minimaler Axialspalt (A) zwischen Lauf- und Leitschaufelanordnung in einer ersten radialen Lage einer Stirnfläche (1.2) der Laufschaufelanordnung zwischen dieser Stirnfläche und einem dieser gegenüberliegenden ersten Kontaktbereich (Kₐ) wenigstens einer der Leitschaufelblattvorderkanten und
in einer hiervon verschiedenen zweiten radialen Lage der Stirnfläche zwischen der Stirnfläche und einem dieser gegenüberliegenden zweiten Kontaktbereich (Kᵢ) dieser Leitschaufelblattvorderkante ausgebildet ist,
wobei diese Leitschaufelblattvorderkante zwischen dem ersten und dem zweiten Kontaktbereich einen Axialversatz von höchstens 0,6 % einer Radialhöhe der Leitschaufelblattvorderkante aufweist.

2. Gasturbinenstufe nach dem vorhergehenden Anspruch, **dadurch gekennzeichnet, dass** der erste Kontaktbereich ein radial äußerer Kontaktbereich (Kₐ) oder ein radial innerer Kontaktbereich ist.

3. Gasturbinenstufe nach einem der vorhergehenden Ansprüche, **dadurch gekennzeichnet, dass** der zweite Kontaktbereich (Kᵢ) in radialer Richtung wenigstens 2% und/oder höchstens 20% der Radialhöhe der Leitschaufelblattvorderkante von dem ersten Kontaktbereich und/oder einem Ende der Leitschaufelblattvorderkante beabstandet ist.

4. Gasturbinenstufe nach einem der vorhergehenden Ansprüche, **dadurch gekennzeichnet, dass** die Leitschaufelblattvorderkante in einem Radialbereich (R) auf der dem ersten Kontaktbereich gegenüberliegenden Seite des zweiten Kontaktbereichs, insbesondere in einem Radialbereich zwischen 30% und 50% der Radialhöhe der Leitschaufelblattvorderkante, eine Vorwärtsneigung von wenigstens 8°, insbesondere wenigstens 10° aufweist.

5. Gasturbinenstufe nach dem vorhergehenden Anspruch, **gekennzeichnet durch** einen Übergangsbereich (U), der sich von dem zweiten Kontaktbereich zu dem Radialbereich erstreckt, und in dem eine Neigung der Leitschaufelblattvorderkante, insbesondere streng monoton, zunimmt.

6. Gasturbinenstufe nach einem der vorhergehenden Ansprüche, **dadurch gekennzeichnet, dass** die Leitschaufelblattvorderkante zwischen dem ersten und dem zweiten Kontaktbereich verstärkt ist.

7. Gasturbinenstufe nach einem der vorhergehenden Ansprüche, **dadurch gekennzeichnet, dass** die Stirnfläche eine Stirnfläche (1.2) eines Außendeckbandes (1.1) der Laufschaufelanordnung ist.

8. Gasturbinenstufe nach dem vorhergehenden Anspruch, **dadurch gekennzeichnet, dass** eine der Leitschaufelanordnung gegenüberliegende Schaufelblatthinterkante (1.3) der Laufschaufelanordnung axial von der Leitschaufelanordnung weg versetzt ist.

9. Gasturbine, insbesondere Flugtriebwerk, mit wenigstens einer Gasturbinenstufe nach einem der vorhergehenden Ansprüche.

## Claims

1. Gas turbine stage having a rotor blade arrangement having several rotor blades (1) and an adjacent guide blade arrangement having several guide blades (2), having guide blade front edges (2. 1) which are opposite the rotor blade arrangement,
**characterised in that**
in a first radial position of a front face (1.2) of the rotor blade arrangement, a minimum axial gap (A) between the rotor blade and guide blade arrangement is formed between this front face and a first contact region (Kₐ), located opposite this, of at least one of the guide blade front edges, and
in a different, second radial position of the front face, the minimum axial gap (A) is formed between the front face and a second contact region (Kᵢ), located opposite this, of this guide blade front edge,
wherein this guide blade front edge between the first and the second contact regions has an axial displacement of maximum 0.6% of a radial height of the guide blade front edge.

2. Gas turbine stage according to the preceding claim, **characterised in that** the first contact region is a radial outer contact region (Kₐ) or a radial inner contact region.

3. Gas turbine stage according to one of the preceding claims, **characterised in that** the second contact region (Kᵢ) is, in the radial direction, at least 2% and/or maximum 20% of the radial height of the guide blade front edge separated from the first contact region and/or one end of the guide blade front edge.

4. Gas turbine stage according to one of the preceding claims, **characterised in that,** in a radial region (R) on the side of the second contact region opposite the first contact region, in particular in a radial region between 30% and 50% of the radial height of the guide blade front edge, the guide blade front edge has a forward inclination of at least 8°, in particular at least 10°.

5. Gas turbine stage according the preceding claim, **characterised by** a transition region (U) which extends from the second contact region to the radial region, and in which an inclination of the guide blade front edge increases, in particular strictly monotonously.

6. Gas turbine stage according to one of the preceding claims, **characterised in that** the guide blade front edge is reinforced between the first and the second contact region.

7. Gas turbine stage according to one of the preceding claims, **characterised in that** the front face is a front face (1.2) of an outer cover band (1.1) of the rotary blade arrangement.

8. Gas turbine stage according the preceding claim, **characterised in that** a blade rear edge (1.3) of the rotary blade arrangement, opposite the guide blade arrangement, is shifted axially away from the guide blade arrangement.

9. Gas turbine, in particular an aircraft engine, having at least one gas turbine stage according to one of the preceding claims.

## Revendications

1. Étage de turbine à gaz avec une couronne d'aubes mobiles comprenant plusieurs aubes mobiles (1) et une couronne d'aubes directrices contiguë comprenant plusieurs aubes directrices (2) présentant des bords avant de pales d` aubes directrice (2.1) opposés à la couronne d'aubes mobiles,
**caractérisé en ce que** :
une fente axiale (A) minimale entre la couronne d'aubes mobiles et la couronne d'aubes directrices est, dans une première position radiale d'une surface frontale (1.2) de la couronne d'aubes mobiles, formée entre ladite surface frontale et une première zone de contact (Kₐ), opposée à celle-ci, d'au moins un des bords avant de pales d' aubes directrices, et
dans une deuxième position radiale, distincte de la première, de la surface frontale, entre la surface frontale et une deuxième zone de contact (Kᵢ), opposée à celle-ci, dudit bord avant de pale d'aube directrice,
ledit bord avant de pale d'aube directrice présentant entre la première et la deuxième zone de contact un décalage axial maximal de 0,6 % de la hauteur radiale du bord avant de pale d'aube directrice.

2. Étage de turbine à gaz selon la revendication précédente, **caractérisé en ce que** la première zone de contact est une zone de contact (Kₐ) radialement extérieure ou une zone de contact radialement intérieure.

3. Étage de turbine à gaz selon l'une des revendications précédentes, **caractérisé en ce que** la deuxième zone de contact (Kᵢ) est, dans la direction radiale, espacée d'au moins 2 % et/ou d'au plus 20 % de la hauteur radiale du bord avant de pale d'aube directrices par rapport à la première zone de contact et/ou à une extrémité du bord avant de pale d'aube directrice.

4. Étage de turbine à gaz selon l'une des revendications précédentes, **caractérisé en ce que** le bord avant de pale d'aube directrice présente une inclinaison vers l'avant d'au moins 8°, en particulier d'au moins 10°, dans une zone radiale (R) sur le côté de la deuxième zone de contact opposé à la première zone de contact, en particulier dans une zone radiale entre 30 % et 50 % de la hauteur radiale du bord avant de pale d'aube directrice.

5. Étage de turbine à gaz selon la revendication précédente, **caractérisé par** une zone de transition (U) qui s'étend de la deuxième zone de contact à la zone radiale, et dans laquelle s'accroît, en particulier de manière strictement monotone, une inclinaison, du bord avant de pale d'aube directrice.

6. Étage de turbine à gaz selon l'une des revendications précédentes, **caractérisé en ce que** le bord avant de pale d'aube directrice est renforcé entre la première et la deuxième zone de contact.

7. Étage de turbine à gaz selon l'une des revendications précédentes, **caractérisé en ce que** la surface frontale est une surface frontale (1.2) d'un anneau de renforcement extérieur (1.1) de la couronne d'aubes mobiles.

8. Étage de turbine à gaz selon la revendication précédente, **caractérisé en ce qu'**un bord arrière (1.3) d'aube de la couronne d'aubes mobiles opposé à la couronne d'aubes directrices est axialement éloigné par rapport à la couronne d'aubes directrices,

9. Turbine à gaz, en particulier réacteur d'avion, avec au moins un étage de turbine à gaz selon l'une des revendications précédentes.
